**Europäisches Patentamt**

**European Patent Office**

**Office européen des brevets**

(11) Veröffentlichungsnummer: **0 321 721**
**A2**

## (12) EUROPÄISCHE PATENTANMELDUNG

(21) Anmeldenummer: **88119551.5**

(22) Anmeldetag: **24.11.88**

(51) Int. Cl.4: **B64G 1/62**

(30) Priorität: **22.12.87 DE 3743513**

(43) Veröffentlichungstag der Anmeldung:
**28.06.89 Patentblatt 89/26**

(84) Benannte Vertragsstaaten:
**FR GB**

(71) Anmelder: **ERNO Raumfahrttechnik
Gesellschaft mit beschränkter Haftung
Hünefeldstrasse 1-5
D-2800 Bremen 1(DE)**

(72) Erfinder: **Zelck, Gerd
Fachenfelder Weg 129
D-2105 Seevetal 3(DE)**

(54) **Vorrichtung zur Landehilfe von schweren Weltraumkapseln.**

(57) Es ist vorgesehen, an der Kapsel ein ausfahrbares und/oder entfaltbares Rotorblattsystem als Landehilfe anzuordnen. Zum Betrieb des Rotorblattsystems werden Blattspitzentriebwerke an den Rotorblättern vorgesehen.

FIG. 4

EP 0 321 721 A2

## Vorrichtung zur Landehilfe von schweren Weltraum-Kapseln

Die Erfindung bezieht sich auf eine Vorrichtung zur Landehilfe von schweren Weltraum-Kapseln in Form von entfaltbaren Anordnungen, die während der Abstiegsphase und des Landeanfluges außerhalb der Kapsel zur Herabsetzung der Sinkgeschwindigkeit und Ansteuerung von Zielgebieten freisetzbar sind.

Es ist bereits bekannt, Landehilfen mittels entfaltbarer Fallschirme oder Paragleiter zu schaffen. Hierbei hat sich gezeigt, daß diese Art für eine Abbremsung von kleinen Weltraum-Rückkehrkapsel eine zweckmäßig funktionstüchtige Anordnung darstellt. Es bestehen aber Probleme, eine ausreichende Landezielgenauigkeit zu erreichen, und für bemannte große Rückkehrkapseln ergeben sich bei diesen Landesystemen zusätzlich Zuverlässigkeits- und Sicherheitsrisiken.

Entsprechende Berechnungen an einem ausgewählten Beispiel von 13,5 t Landegewicht haben aber ergeben, daß zur Erzielung einer Kapsel-Sinkgeschwindigkeit von 10 m/sec ein Hauptfallschirm-Durchmesser von etwa 50 m erforderlich wird und aus Redundanzgründen zwei Schirme anzuordnen sind.

Weiterhin ist ein Energieabsorbersystem erforderlich, daß den Ladestoß von 10 m/sec Sinkgeschwindigkeit auf ein erträgliches Maß für die Besatzung reduziert. Hierfür stehen nur etwa 2 m Weg zur Verfügung. Wird der Hauptfallschirm durch einen Paragleiter ersetzt, dann kann bei einem Gleitwinkel von 1 : 3 eine Vorausgeschwindigkeit erreicht werden. Der aerodynamische Auftrieb des Paragleiters steigt gegenüber dem Fallschirm um etwa den Faktor 3, wodurch umgekehrt proportional der Flächenbedarf sinkt. Diese Auftriebsfläche des Paragleiters beträgt bei diesen Beispiel dann aber immer noch 650 m², was einem Kreisdurchmesser von 29 m entsprechen würde. Auch hierbei müßte aus Redundanzgründen ein zweiter Paragleiter bereitgehalten oder mit ausgefahren werden.

Diese weichen Strukturen mit derartig großen Abmessungen sind nun äußerst empfindlich für Böen- und Scherwinde und damit nicht mehr allwettertauglich. Durch ein Gewitter mit vertikalen Scherwinden von 40 m/sec und mehr könnte mit Fallschirm und Paragleiter auf keinen Fall sicher abgestiegen werden, aber auch schon normale Böenwalzen mit einem Durchmesser von 30 bis 50 m könnte diese Landesysteme zusammenklappen lassen. Eine praktische Erprobung dieser Systeme mit derartigen Abmessungen wurden bisher auch noch nicht durchgeführt.

Ein weiterer Mangel bei Paragleitern ist der geringe Gleitwinkel von 1 : 3, mit dem ein starker Windversatz nicht ausgleichbar ist. Selbst bei Windstille und einem Ausfahren des Paragleiters in 4000 m Höhe würde sich nur eine seitliche Reichweite von 12 km ergeben. Eine Landezielgenauigkeit von 2 x 2 km auf dem Lande, wie es bei bestehenden Projekten vorgesehen ist, muß deshalb als sehr unsicher angesehen werden, weil die Einschußungenauigkeiten bei einem flachen Eintrittswinkel in die Atmosphäre erheblich größere Versätze verursachen werden.

Die Aufgabe der Erfindung ist es, eine gattungsgemäße Anordnung zu schaffen, um Mängel und Unsicherheiten beim Landen von größeren Wiedereintrittskapseln zu beseitigen und einen Gleitwinkel, eine Einsatzhöhe und damit eine Reichweite bei der Landung erheblich zu vergrößern, sowie eine Allwettertauglichkeit zu gewährleisten und darüber hinaus den Landestoß beim Aufsetzen nahezu auf Null zu reduzieren.

Diese Aufgabe wird erfindungsgemäß dadurch gelöst, daß an der Kapsel ein ausfahrbares und/oder entfaltbares Rotorblattsystem als Landehilfe in einer Aufnahme angeordnet ist und die Rotorblätter Blattspitzentriebwerke aufweisen.

Hierdurch wird die Anwendung eines Hubschrauberrotorprinzips für Weltraum-Kapseln ermöglicht, wobei der Zusatzantrieb mit den Rotorblättern verknüpft ist.

Eine günstige Ausbildung wird dadurch geschaffen, daß die Aufnahme für das Rotorblattsystem in der Ruhelage durch eine längsseitige Vertiefung im Kapselmantel gebildet ist.

Um eine funktionssichere Anordnung in Einklang mit entsprechenden Gewichtsverhältnissen zu schaffen, ist vorgesehen, daß die Blattspitzentriebwerke als Hydrazin-Raketentriebwerke ausgebildet sind.

Eine einfache Ausbildung wird dadurch geschaffen, daß das Rotorblattsystem aus zwei Rotorblättern gebildet wird, die über einen Rotorarm mittels eines Rotorkopfes angeordnet und über gelenkig angeordnete Verbindungsstangen sowie Verstellzylinder einstellbar sind.

Um eine gute Entfaltbarkeit zu erzielen, wird vorgeschlagen, daß die Rotorblätter über die Verbindungsstangen und Verstellzylinder mittels einer Seilwinde über Verbindungsseile entfaltbar angeordnet sind.

Ferner ist vorgesehen, daß der Rotorarm in einer Schienenanordnung an der Kapsel über eine Rolle geführt ist und über eine antreibbare Spindel längs der Kapsel verschiebbar angeordnet und der Rotorarm über ein Gelenkpunkt mittels eines Verstellzylinders verschwenkbar und einstellbar ist.

Hierbei ist es möglich, die Schwerpunktlage der Kapsel zu berücksichtigen und auch ber den Verstellzylinder eine Neigung des Rotorarmes vorzunehmen.

Zur Treibstofflagerung wird vorgeschlagen, daß die Rotorblätter Hohlräume als Treibstoffbehältnisse für die Blattspitzentriebwerke aufweisen. Zusätzlich kann der Raum oberhalb des Rotorkopfes als Treibstofftank genutzt werden.

Zur Vereinfachung der Anordnung und Verlagerung von Steuerungen wird vorgeschlagen, daß das Rotorblattsystem von einer Bodenstation steuerbar ist.

In der Zeichnung ist ein Ausführungsbeispiel der Erfindung schematisch dargestellt. Es zeigen:

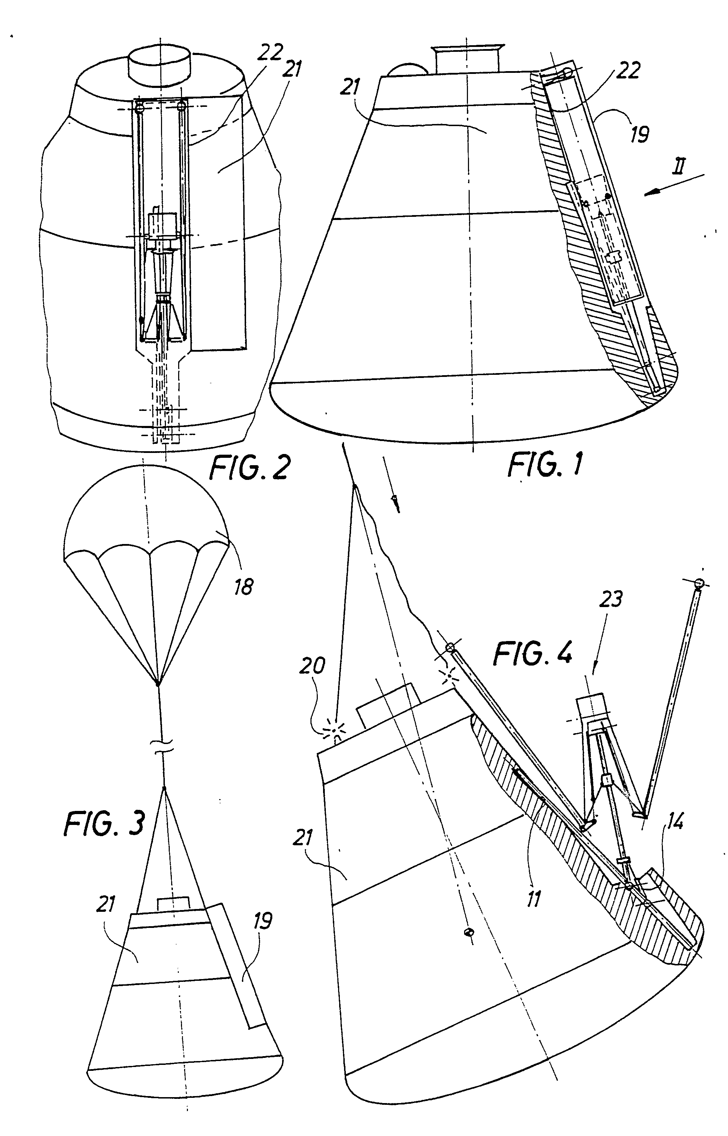

Fig 1 eine Teilschnittdarstellung einer Kapsel mit einem Rotorblattsystem in gefaltetem Zustand,

Fig 2 eine Ansicht der Kapsel in Pfeilrichtung II der Fig. 1,

Fig 3 eine Kapsel vor dem Ausfahren des Rotorblattsystems mit einem Vorfallschirm,

Fig 4 erste Phase der Entfaltung des Rotorblattsystems und Lösen des Vorfallschirmes,

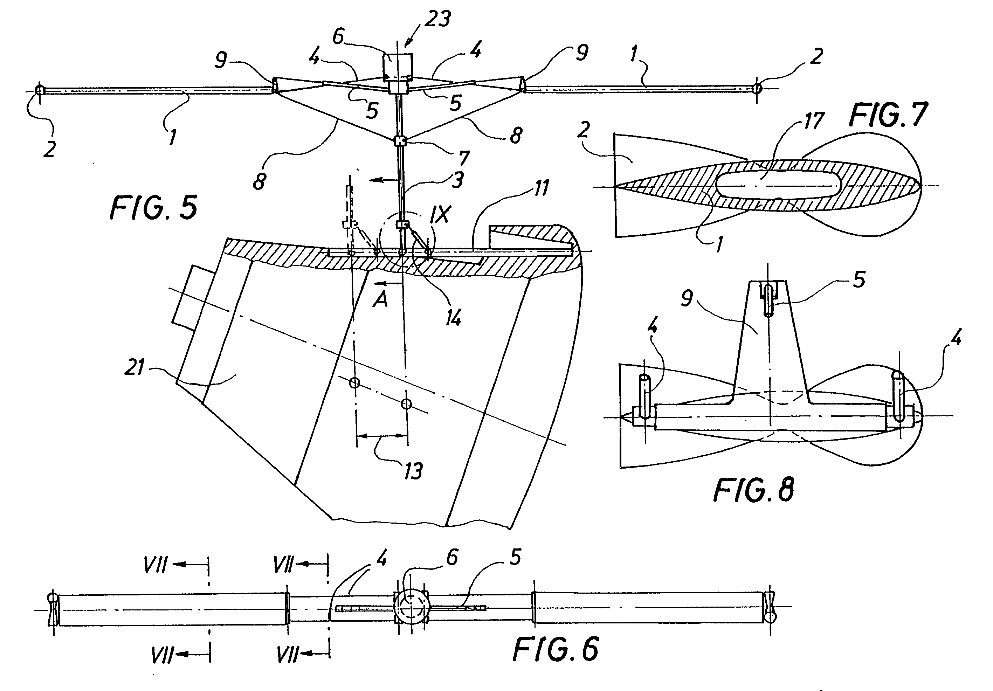

Fig 5 ein Rotorblattsystem im Betriebszustand,

Fig 6 eine Draufsicht auf ein Rotorblattsystem,

Fig 7 einen Schnitt gemäß Linie VII-VII der Fig. 6 im vergrößerten Maßstab,

Fig 8 einen Schnitt gemäß Linie VIII-VIII der Fig.6 im vergrößerten Maßstab,

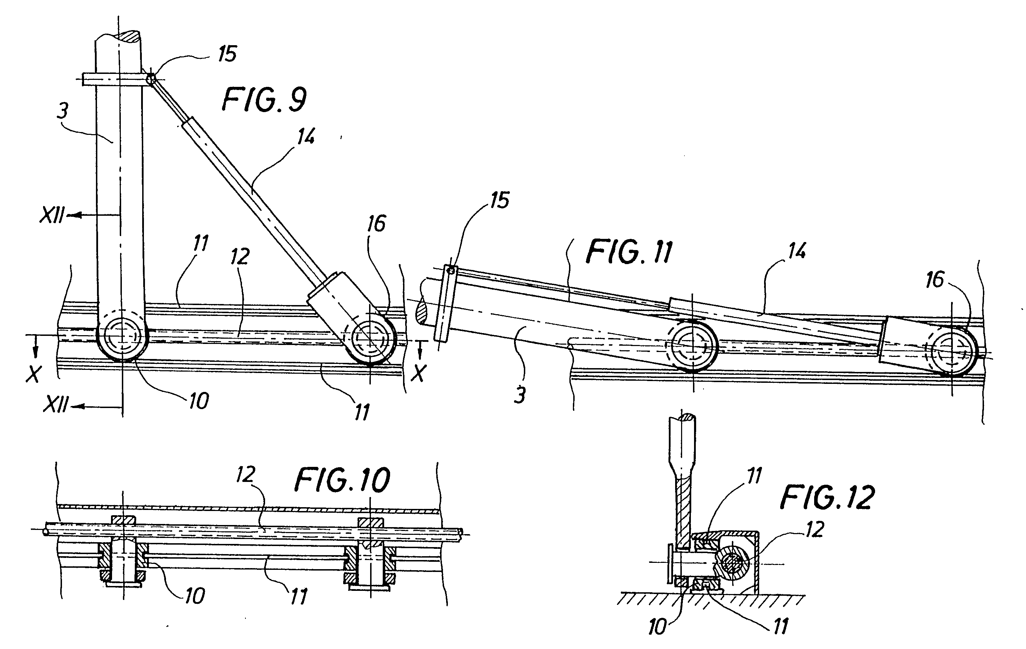

Fig 9 eine Einzelheit IX der Fig. 5 im vergrößerten Maßstab,

Fig 10 einen Schnitt gemäß Linie X-X der Fig. 9,

Fig 11 eine Einzelheit IX der Fig. 5 im vergrößerten Maßstab im gefalteten Zustand des Rotors,

Fig. 12 einen Schnitt gemäß Linie XII-XII der Fig. 9.

Bei der dargestellten Anordnung besitzt eine Kapsel 21 eine Aufnahme 22 in Form einer längsseitigen Vertiefung des Kapselmantels für ein entfaltbares Rotorblattsystem 23. Dieses ist während des Betriebes der Kapsel 21 mit einer Abdeckung 19 versehen, die im Landeanflug absprengbar ist.

Der Rotor des Rotorblattsystems 23 wird durch zwei Rotorblätter 1 gebildet, die Blattspitzentriebwerke 2 in Form von Hydrazin-Raketentriebwerke aufweisen und über einen Rotorarm 3 und Zwischenschaltung eines Rotorkopfes 6 getragen werden. Die Rotorblätter 1 sind dabei über Verbindungsstangen 4 und Verstellzylinder 5, die pneumatisch oder hydraulisch betätigbar sind, mit dem Rotorkopf 6 gelenkig verbunden.

Die Rotorblätter 1 sind mit diesen Verbindungselementen 4,5 und mit zusätzlicher Hilfe einer Seilwinde 7 und Verbindungsseilen 8 aus- bzw. eingeklappt und damit faltbar. Die einzelnen Gelenke an dem Rotorblatt 1 sind in einer mit diesem verbundenen Traverse 9, die eine Hebelarmwirkung ermöglicht, untergebracht. An diese Traverse 9 greifen auch die Kräfte und Steuereinrichtungen zur konstanten und/oder zyklischen Blattverstellung an.

Der Rotorarm 3 ist über eine Rolle 10, die in einem kapselseitigen Schienenführungssystem 11 angeordnet ist, mit der Kapsel 21 verbunden. Über eine zugeordnete antreibbare Spindel 12 wird der Rotorarm 3 längs zur Kapselachse verschoben und so für die Entfaltung ausgefahren. Der Rotorarm 3 ist dabei auch auf unterschiedliche Schwerpunktlagen in einem Bereich 13 positionierbar.

Mit Hilfe eines Verstellzylinders 14, der an einem Gelenkpunkt 15 mit dem Rotorarm 3 und über die Rolle 10, Schienenführung 11 und Spindel 12 mit der Kapsel 21 verbunden ist, wird der Winkel zur Kapsellängsachse eingestellt und damit die Richtung des Gleitfluges und dessen Neigungswinkel eingestellt. Außerdem wird mit dem Verstellzylinder 14 das Rotorblattsystem 23 aus dem gefalteten Zustand hochgeklappt.

Der Treibstoff für die Blattspitzentriebwerke 2 wird teilweise oder vollständig - je nach dem noch näher zu definierenden Verbrauch - in Hohlräumen 17 der Rotorblätter 1 untergebracht. Als Treibstoff bietet sich Hydrazin an, weil diese Komponente auch für das Triebwerkssystem der Kapsel 21 verwendet wird und ein Anfahren der Triebwerke 2 mit Hydrazin in jeder beliebigen Höhe sicher gewährleistet ist.

Eine weitere Möglichkeit der Hydrazin-Verwendung ist, auch die Verstelleinrichtungen, wie Verstellzylinder 5,14 und die Verstellspindel 12 sowie das eventuell benötigte Stoßabsorbersystem für das Aufsetzen mit Hydrazin-Energie (Druckgas) anzutreiben, so daß für den Abstiegsvorgang elektrische Energie nur für die Steuerung und Kommunikation benötigt wird.

Zusätzlich zu der Kraftstoffunterbringung in den Rotorblättern 1 ist es auch möglich, den Raum oberhalb des Rotorkopfes 6 zu nutzen.

Der gesteuerte Abstieg der Kapsel 21 in der Atmosphäre läuft folgendermaßen ab:

I: Bereits bei hoher Unterschallgeschwindigkeit (in etwa 12 - 10 km Höhe) wird der Vorfallschirm 18 ausgestoßen.

II: Nach Abbremsung der Kapsel 21 auf eine entsprechend niedrige Sinkgeschwindigkeit wird die Abdeckung 19 für das gefaltete Rotorblattsystem 23 abgesprengt und die Rotorblätter 1 ausgefahren und entfaltet.

III: Bei einer Entfaltungsposition der Rotorblätter 1, bei der dieser etwa den gleichen Widerstand hat wie der Vorfallschirm 18, wird dieser durch Kappen der Verbindungsleinen 20 von der Kapsel 21 getrennt.

IV: Mit dem vollständig ausgefahrenen Rotorblattsystem 23 wird ein gesteuerter Abstieg durch Autorotationsflug eingeleitet. Hierbei kann ein Gleitwinkel von etwa 1 : 6 erreicht werden. Durch Einschalten der Blattspitzentriebwerke 2 kann dieser Gleitwinkel auf etwa 1 : 30 verbessert werden. Um eine möglichst große seitliche Reichweite zu erzielen, sollte der Abstieg mit dem Rotorblattsystem 23 so hoch wie möglich beginnen. Bei einer Ausgangshöhe von 6.000 m kann beispielsweise mit reiner Autorotation in einem Radius von 30 - 36 km punktförmig gelandet werden. Durch Einschaltung der Blattspitzentriebwerke 2 kann dieser Radius auf beispielsweise 150 - 180 km (Gleitwinkel 30) vergrößert werden. Bei Sinkflug wird mit konstantem Blattanstellwinkel geflogen, der allerdings einstellbar ist.
Bei Geradeausflug und Kurvenflug wird mit zyklischer Blattverstellung gearbeitet, wobei ein (plumper) Kurvenflug durch Einleitung eines Rollmomentes auf der entsprechenden Seite eingeleitet wird. Hierbei wird zunächst davon ausgegangen, daß die längliche Form der Kapsel eine ausreichende Seitenstabilität bei einer entsprechenden Vorausgeschwindigkeit erbringt. Anderenfalls müßte eine gesonderte Seitenleitwerksfläche, beispielsweise in Kombination mit dem Aufsetzsystem, vorgesehen werden.

V: Im letzteren Teil des Abstiegsvorganges bis zum Aufsetzen wird mit Hilfe der Blattspitzentriebwerke 2, einem Teil der Rotationsenergie des Rotors und mit einem maximal möglichen Anstellwinkel der Rotorblätter 1 nahezu ein Schwebezustand der Kapsel 21 erreicht, wobei der Bodeneffekt sich positiv auf den Auftrieb des Rotors auswirkt.
Der verbleibende Landestoß sowie eine eventuelle Geschwindigkeit über Grund wird durch ein geeignetes Absorbersystem, z.B. Airbags, aufgenommen. Der Abstieg wird vollständig vom Boden aus vermessen und gesteuert. Die Besatzung in der Kapsel 21 hat hierbei keine Eingriffsmöglichkeit, weshalb entsprechende Überwachungs- und Steuereinrichtungen in der Kapsel 21 entfallen können.

zung der Sinkgeschwindigkeit und Ansteuerung von Zielgebieten freisetzbar sind, dadurch gekennzeichnet, daß an der Kapsel (21) ein ausfahrbares und/oder entfaltbares Rotorblattsystem (23) als Landehilfe in einer Aufnahme (22) angeordnet ist und die Rotorblätter (1) Blattspitzentriebwerke (2) aufweisen.

2. Vorrichtung nach Anspruch 1, dadurch gekennzeichnet, daß die Aufnahme (22) für das Rotorblattsystem (23) in der Ruhelage durch eine längsseitige Vertiefung im Kapselmantel gebildet ist.

3. Vorrichtung nach Anspruch 1 oder 2, dadurch gekennzeichnet, daß die Blattspitzentriebwerke (2) als Hydrazin-Raketentriebwerke ausgebildet sind.

4. Vorrichtung nach einem der Ansprüche 1 bis 3, dadurch gekennzeichnet, daß das Rotorblattsystem (23) aus zwei Rotorblättern (1) gebildet wird, die über einen Rotorarm (3) mittels eines Rotorkopfes (6) angeordnet und über gelenkig angeordnete Verbindungsstangen (4) sowie Verstellzylinder (5) einstellbar sind.

5. Vorrichtung nach einem der Ansprüche 1 bis 4, dadurch gekennzeichnet, daß die Rotorblätter (1) über die Verbindungsstangen (4) und Verstellzylinder (5) mittels einer Seilwinde (7) über Verbindungsseile (8) entfaltbar angeordnet sind.

6. Vorrichtung nach einem der Ansprüche 1 bis 5, dadurch gekennzeichnet, daß der Rotorarm (3) in einer Schienenanordnung (11) an der Kapsel (21) über eine Rolle (10) geführt ist und über eine antreibbare Spindel (12) längs der Kapsel (21) verschiebbar angeordnet und der Rotorarm (3) über ein Gelenkpunkt (15) mittels eines Verstellzylinders (14) verschwenkbar und einstellbar ist.

7. Vorrichtung nach einem der Ansprüche 1 bis 6, dadurch gekennzeichnet, daß die Rotorblätter (1) Hohlräume (17) als Treibstoffbehältnisse für die Blattspitzentriebwerke (2) aufweisen.

8. Vorrichtung nach einem der Ansprüche 1 bis 7, dadurch gekennzeichnet, daß das Rotorblattsystem (23) von einer Bodenstation steuerbar ist.

Ansprüche

1. Vorrichtung zur Landehilfe von schweren Weltraum-Kapseln in Form von entfaltbaren Anordnungen, die während der Abstiegsphase und des Landeanfluges außerhalb der Kapsel zur Herabset-

FIG. 2

FIG. 1

FIG. 3

FIG. 4

FIG. 5

23

6 4 4 9 1 2

9 5 5 8

1 8

2 1

7

3 11

IX

A

21 14

13

FIG. 7

17

2

1

2

5

9

4 4

FIG. 8

VII VII 4 6 5

VII VII FIG. 6

EP 0 321 721 A2

EP 0 321 721 A2

15

*FIG.9*

3

14

XII

11    12    16

X

10    11

XII

*FIG.10*

12

10    11

15

*FIG.11*

14

3

16

11

*FIG.12*

12

10    11